# EUROPÄISCHE PATENTSCHRIFT

(11) **EP 3 586 021 B1**
(45) Veröffentlichungstag und Bekanntmachung des Hinweises auf die Patenterteilung: **15.04.2020**
(21) Anmeldenummer: 18711487.1
(22) Anmeldetag: 22.02.2018
(51) Int. Cl.: F16C 33/20, F16C 17/10

(54) **GLEITLAGER FÜR EIN STÜTZLAGER, VERFAHREN ZUR HERSTELLUNG EINES GLEITKÖRPERS SOWIE VERFAHREN ZUR HERSTELLUNG EINES GLEITLAGERS**
SLIDE BEARING FOR A SUPPORT BEARING, METHOD FOR PRODUCING A SLIDE BODY AND METHOD FOR PRODUCING A SLIDE BEARING
PALIER LISSE POUR PALIER D'APPUI, PROCÉDÉ DE FABRICATION D'UN CORPS DE GLISSEMENT ET PROCÉDÉ DE FABRICATION D'UN PALIER LISSE

(30) Priorität: 24.02.2017 DE 102017103940
(43) Veröffentlichungstag der Anmeldung: 01.01.2020
(73) Patentinhaber: Vibracoustic AG, 64293 Darmstadt (DE)
(72) Erfinder: WERNER, Philipp, 21339 Lüneburg (DE); KARDOES, Hilrich, 21423 Winsen (DE)
(74) Vertreter: Flügel Preissner Schober Seidel
(86) Internationale Anmeldenummer: PCT/EP2018/054437
(87) Internationale Veröffentlichungsnummer: WO 2018/154017

(56) Entgegenhaltungen:
- EP-A2- 2 574 481
- DE-A1- 2 308 947
- DE-A1- 19 545 425
- DE-A1-102015 217 416
- DE-U- 7 701 761
- JP-A- 2012 097 904
- JP-A- 2013 204 810
- US-A1- 2011 049 834
- US-A1- 2016 069 112
- US-A1- 2016 273 582

## Beschreibung

Die vorliegende Erfindung betrifft ein Gleitlager für ein Stützlager eines Kraftfahrzeuges, aufweisend ein erstes Gehäuseteil, ein zweites Gehäuseteil und eine zwischen den beiden Gehäuseteilen angeordnete Gleitlagervorrichtung. Ferner betrifft die Erfindung ein Verfahren zur Herstellung eines Gleitlagers.

Ein Gleitlager der eingangs genannten Art kann in Stützlagern von gelenkten Achsen zum Einsatz kommen, um eine Rotation zwischen einer Fahrzeugkarosserie und der Feder, die Teil eines Federbeines, insbesondere eines McPherson-Federbein, sein kann, zu ermöglichen.

Das Gleitlager ist dazu in einem Stützlager aufgenommen, das auch als "top mount" bezeichnet werden kann. Über das Stützlager werden die in die Feder beziehungsweise den Dämpfer eingeleiteten Kräfte in die Fahrzeugstruktur übertragen.

Ein Gleitlager der eingangs genannten Art kann auch in Luftfedern von Kraftfahrzeugen eingesetzt werden, um den Luftfederbalg vor Beschädigungen durch Torsion zu schützen, da aufgrund der Achskinematik selbst bei ungelenkten Achsen torsionale Bewegungen auftreten können.

Neben Axial-Kugellagern kommen axiale Gleitlager zur Aufnahme der Rotationsbewegung zum Einsatz. Ein axiales Gleitlager umfasst einen ringscheibenförmigen Gleitkörper, der zwischen zwei Gehäuseteilen angeordnet ist. Da ein reines axiales Gleitlager bei auftretenden radialen Kräften seitlich verrutschen kann, ist weiterhin eine Vorrichtung zur Aufnahme radialer Kräfte vorzusehen, um eine radiale Führung zu gewährleisten. Diese kann integraler Bestandteil des Gleitlagers sein.

Ein derartiges Gleitlager ist in US 8,998,497 B2 offenbart, das zwei Gehäuseteile aus Kunststoff und eine dazwischen angeordnete Gleitlagervorrichtung aufweist. Die Gleitlagervorrichtung umfasst einen ringscheibenförmigen Gleitkörper aus Kunststoff, einen Metallverstärkungsring und einen hülsenförmigen Gleitkörper aus Kunststoff.

Ferner geht aus DE 10 2008 057 590 A1 ein Gleitlager hervor mit einem aus zwei Gehäuseteilen gebildeten Kunststoffgehäuse. Zwischen den Gehäuseteilen sind eine obere Druckscheibe und eine untere Druckscheibe aus Metall, eine Druckgleitscheibe aus Kunstharz, eine innere Hülse, eine äußere Hülse und eine Kunstharzhülse angeordnet.

In EP 2 574 481 A2 ist ferner ein Gleitlager offenbart mit den Merkmalen des Oberbegriffs des Anspruchs 1, das ein erstes Gehäuseteil und ein zweites Gehäuseteil aufweist, wobei zwischen den beiden Gehäuseteilen eine axial wirkende Gleitlagervorrichtung vorgesehen ist. Die Gleitlagervorrichtung weist eine metallische Ringscheibe und eine polymere Kunststoffgleitscheibe auf. Ferner geht aus DE 10 2009 056 351 A1 eine Federbeingleitlageranordnung mit einem Federbeingleitlager hervor, das aus einer unteren Lagerschale, einer oberen Lagerschale und aus wenigstens einem Gleitelement gebildet ist. In die untere Lagerschale ist eine Verstärkung integriert, die lochscheibenförmig ausgebildet ist und eine plane Kreisringfläche aufweist, auf der das Gleitelement direkt aufliegt und die demnach die untere Gleitfläche bildet.

DE 195 45 425 A1 offenbart einen Zweischicht-Gleitlagerwerkstoff, der eine Kunststoffgleitschicht mit einer Polyamid-Matrix und ein Trägermaterial aufweist, wobei die Gleitschicht PTFE in einer Konzentration von 3 bis 40 Vol.-% enthält. Die Gleitschicht kann mit Additiven versehen sein, wobei es sich bei den Additiven um Calciumcarbonat, Glimmer, PE, Wachse, mineralisches Öl, synthetisches Öl, Calciumfluorid, Molybdänsulfid, Graphit, Bronzepulver, Fasern oder eine Kombination dieser Stoffe handelt. Das Trägermaterial besteht aus einem Metall. Der Gleitlagerwerkstoff wird für die Herstellung von Bundbuchsen verwendet. Außerdem geht aus DE 195 45 425 A1 ein Verfahren zur Herstellung eines ZweischichtGleitlagerwerkstoffs hervor, bei dem eine Kunststoffgleitschicht mit einer Polyamid-Matrix, die PTFE in einer Konzentration von 3 bis 40 Vol.-% enthält, auf ein Trägermaterial aufgebracht wird, indem zunächst eine Polymerschmelze hergestellt wird, in die aktive Zentren eingebracht werden, aus der Polymerschmelze ein Pulver hergestellt wird, das Pulver auf das Trägermaterial aufgetragen wird und anschließend in geschmolzenem Zustand mit dem Trägermaterial verbunden wird.

Der vorliegenden Erfindung liegt die Aufgabe zugrunde, ein Gleitlager für ein Stützlager zu schaffen, das verbesserte Gleiteigenschaften aufweist und zudem robust und kostengünstig ist. Des Weiteren soll ein Verfahren zur Herstellung eines Gleitlagers mit verbesserten Gleiteigenschaften geschaffen werden.

Zur Lösung der Aufgabe wird ein Gleitlager mit den Merkmalen des Anspruchs 1 sowie ein Verfahren mit den Merkmalen des Anspruchs 15 vorgeschlagen.

Vorteilhafte Ausgestaltungen des Gleitlagers sind in den abhängigen Ansprüchen offenbart.

Das erfindungsgemäße Gleitlager für ein Stützlager weist ein erstes Gehäuseteil, ein zweites Gehäuseteil und eine zwischen den beiden Gehäuseteilen angeordnete Gleitlagervorrichtung auf, wobei die Gleitlagervorrichtung wenigstens einen ersten Gleitkörper und wenigstens einen zweiten Gleitkörper aufweist, und wobei wenigstens ein Abschnitt des ersten Gleitkörpers aus einem Hybridwerkstoff ist.

Das Gleitlager wird vorzugsweise als Stützlager für ein Kraftfahrzeug eingesetzt. Unter einem Kraftfahrzeug ist vorliegend sowohl ein Personenkraftfahrzeug als auch ein Nutzfahrzeug verstanden. Das Gleitlager kann in einem Federbeinstützlager für ein Federbein eingesetzt werden, um eine Rotation zwischen einer Fahrzeugkarosserie und einer Feder, die Bestandteil des Federbeins ist, zu ermöglichen. Ferner kann das Gleitlager auch bei einer Luftfeder eingesetzt werden, um die auftretenden Torsionsbewegungen auszugleichen, die durch Vorspuränderungen an gelenkten und nicht gelenkten Achsen während des Einfederns entstehen.

Unter Hybridwerkstoff wird vorliegend ein Verbundwerkstoff verstanden, der eine Kombination aus metallischen, keramischen und/oder polymeren Werkstoffen ist, wobei der Verbundwerkstoff vorzugsweise als Schichtverbund aus wenigstens zwei dieser Werkstoffe gebildet ist. Die Trägerschicht kann vorliegend auch als Tragkörper, Träger oder Substrat bezeichnet werden.

Da wenigstens ein Abschnitt des ersten Gleitkörpers aus einem als Schichtverbund gebildeten Hybridwerkstoff ist, weist das Gleitlager gute Gleiteigenschaften sowie eine hohe Robustheit auf. Darüber hinaus lässt sich ein aus einem Hybridwerkstoff erzeugter Gleitkörper kostengünstig herstellen. In einer vorteilhaften Ausgestaltung ist der gesamte erste Gleitkörper aus einem Hybridwerkstoff. Ferner können mehrere erste Gleitkörper und/oder zweite Gleitkörper vorgesehen sein, die vorzugsweise ringförmig angeordnet sind und wenigstens teilweise aus einem Hybridwerkstoff sind.

Vorteilhaft weist das erste Gehäuseteil einen ersten Auflageabschnitt und einen ersten Hülsenabschnitt auf. Vorteilhaft ragt der erste Hülsenabschnitt senkrecht von dem ersten Auflageabschnitt ab. Das zweite Gehäuseteil weist vorteilhaft einen zweiten Auflageabschnitt und einen zweiten Hülsenabschnitt auf. Vorteilhaft ragt der zweite Hülsenabschnitt senkrecht von dem zweiten Auflageabschnitt ab. Die beiden Hülsenabschnitte bilden eine Öffnung beispielsweise zur Aufnahme eines Stoßdämpfers. Vorteilhaft greift ein Abschnitt des ersten Hülsenabschnitts in einen im zweiten Gehäuseteil ausgebildeten Rücksprung ein. Die Gleitlageranordnung ist vorteilhaft zwischen den Aufnahmeabschnitten und den Hülsenabschnitten angeordnet.

Der Hybridwerkstoff weist eine Trägerschicht und eine Gleitschicht auf. Vorzugsweise ist die Trägerschicht aus einem festeren und/oder steiferen Werkstoff als die Gleitschicht. Weiterhin vorteilhaft ist die Trägerschicht dem Gehäuseteil zugeordnet, wohingegen die Gleitschicht dem zweiten Gleitkörper zugeordnet ist. Die Gleitschicht kann glatt oder rau sein. Wenn die Gleitschicht rau ist, dann können die Vertiefungen der Unebenheiten als Depot für ein Schmiermittel dienen. Vorteilhaft weist die Gleitfläche eine gemittelte Rautiefe (Rz) zwischen ca. 20 und ca. 65, vorzugsweise zwischen ca. 30 und ca. 55 auf.

Vorteilhaft liegt die Gleitschicht gleitend an dem zweiten Gleitkörper an. Somit fungiert die Gleitschicht als Gleitpartner für den zweiten Gleitkörper. Die Gleitschicht und der zweite Gleitkörper können aneinander abgleiten, um eine rotatorische Relativbewegung zwischen einer Fahrzeugkarosserie und der Feder zu ermöglichen.

In einer vorteilhaften Ausgestaltung ist die Trägerschicht aus Metall. Die Trägerschicht aus Metall dient der besseren Verteilung der Lasten in ein oberes Gehäuseteil eines Stützlagers, da die in das Gleitlager von einer Feder eingeleiteten Kräfte ungleichmäßig über den Umfang des Gleitlagers verteilt auftreten können. Dadurch können in das obere Gehäuseteil eingeleitete Lastspitzen besser verteilt und das Gesamtsystem robuster ausgeführt werden.

Die Gleitschicht und/oder der zweite Gleitkörper ist aus Kunststoff oder Kunststoffcompound. Somit bildet die Gleitschicht aus Kunststoff zusammen mit dem zweiten Gleitkörper aus Kunststoff eine wirksame Gleitpaarung. Dadurch weist das Gleitlager gute Gleiteigenschaften auf. Insbesondere bildet die Gleitschicht aus einem Kunststoff eine funktionelle polymere Gleitschicht. Vorteilhaft ist der Kunststoff der Gleitschicht sowie der des Gleitkörpers ein teilkristallines Polymer. Vorteilhaft sind beide Kunststoffe nicht identisch, sondern bezüglich geringen Verschleißes und niedriger Losbrechmomente als tribologisches System aufeinander abgestimmt. Vorteilhaft ist die Gleitschicht aus Polyamid, Polyoxymethylen, Polytetrafluorethylen (PTFE) oder Polyethylen.

Die Gleitschicht und der zweite Gleitkörper bilden eine Gleitpaarung entweder aus zwei verschiedenen Polymeren aus den Gruppen der Polyamide (PA), der Polyoxymethylene (POM), der Polyketone (PK), Fluorpolymere, z. B. Polytetrafluorethylen (PTFE), der Polyethylenterephthalate (PET) oder der Polybutylenterephthalate (PBT), oder die Gleitpaarung wird aus Polyketon gegen Polyketon gebildet, wobei die Polymere der Gleitpaarung jeweils in einer kontinuierlichen, thermoplastischen Polymerphase vorliegen.

Durch den Einsatz einer Gleitpaarung aus zwei thermoplastischen Polymeren aus den Gruppen PA, POM, PK, PET, PBT und PTFE können sehr gute tribologische Eigenschaften kostengünstig eingestellt werden, wenn beide Schichten eine kontinuierliche, thermoplastische Polymerphase ausbilden. Bevorzugt wird der zweite Gleitkörper mittels Spritzguss hergestellt, während die Gleitschicht auf die metallische Trägerschicht mittels eines Pulverbeschichtungsprozesses aufgebracht wird. Die Gleitpaarung sorgt für einen geringen Verschließ beider Reibpartner, niedrige Losbrechmomente, einen geringen Reibkoeffizienten und ist kostengünstig.

Die Gleitschicht und der zweite Gleitkörper bestehen aus unterschiedlichen Kunststoffklassen der Klassen Polyamid (PA), Polyoxymethylen (POM), Polyketon (PK), Fluorpolymere, z. B. Polytetrafluorethylen (PTFE), Polyethylenterephthalat (PET) oder Polybutylenterephthalate (PBT). Alternativ können die Gleitschicht und der zweite Gleitkörper aber auch beide aus Polyketon bestehen. Die Reibpaarung bestehend aus kontinuierlichen Phasen von PA, POM, PK, PTFE, PET oder PBT weist zudem geringe Adhäsionskräfte und damit einen geringen Reibkoeffizienten und somit verbesserte Gleiteigenschaften auf. Da die Gleitschicht eine geschlossene Polymerschicht auf der Trägerschicht ausbildet, dient die Gleitschicht als Korrosionsschicht für die metallische Trägerschicht. Die Gleitschicht kann mittels Pulverbeschichtung, insbesondere mittels elektrostatischer Pulverbeschichtung, auf die Trägerschicht aufgebracht sein. Hierzu liegt die Gleitschicht als Pulver vor, das auf die Trägerschicht im Pulverbeschichtungsverfahren, insbesondere im elektrostatischen Pulverbeschichtungsverfahren, aufgebracht wird. Ferner kann die Gleitschicht auf die Trägerschicht mittels Coil Coating aufgebracht sein. Der zweite Gleitkörper aus Kunststoff kann im Spritzgussverfahren hergestellt sein, im Falle von PTFE z. B. durch Press- und Sinterverfahren.

Ferner ist erkannt worden, dass der Einsatz einer Gleitschicht aus Polyoxymethylen, Polyamid, Polyketon, Polytetrafluorethylen, Polyethylenterephthalat oder Polybutylenterephthalate keine Präzisionsnachbearbeitung der metallischen Trägerschicht erfordert. Außerdem muss die metallische Trägerschicht nicht gehärtet werden, um den Verschleiß zu minimieren, da die polymere Gleitschicht und nicht das Metall den Gleitpartner bildet. Vielmehr wird auf eine für eine Haftung geeignete, kostengünstig herzustellende Oberfläche des metallischen Substrates für die Gleitschicht, zum Beispiel einer gestrahlten Oberfläche oder einer Konversionsschicht, die Gleitschicht aus Polyoxymethylen, Polyketon, Polytetrafluorethylen, Polybutylenterephthalate oder Polyamid aufgetragen. Während des dem elektrostatischen Pulverbeschichtungsprozess nachgeschalteten Umschmelzprozesses, zum Beispiel im Durchlaufofen, bei dem das Pulver in die geschlossene Oberflächenschicht gebracht wird, kühlt das Polymer sehr langsam ab und kann daher hohe Kristallinitätsgrade auch an der Oberfläche ausbilden. Das Resultat ist eine hochkristalline, insbesondere leicht, raue Oberfläche, durch die der Verschleiß minimiert und störende Einlaufeffekte nahezu vollständig vermieden werden können.

Da die Rauigkeit bedingt durch den Kristallisationsvorgang entsteht, nimmt sie mit zunehmendem Kristallinitätsgrad tendenziell zu. Das Co-Polymer von Polyoxymethylen hat mit ca. 75 % einen besonders hohen Kristallinitätsgrad und damit eine besonders deutliche Rauigkeit. Bei geschmierten Systemen führt diese Rauigkeit zu einem besonders guten tribologischen Verhalten, da die Senken der rauen Oberfläche als Schmiermitteldepot im mikroskopischen Maßstab dienen. Die Kombination einer Gleitschicht aus Polyoxymethylen mit einem Gleitkörper aus Polyamid oder Polyketon, unter der Verwendung eines Schmierstoffes ist daher eine besonders zu bevorzugende Gleitpaarung.

Zudem weisen teilkristalline Polymere wie Polyoxymethylen, Polyamid, Polyethylenterephthalat, Polybutylenterephthalat, Polytetrafluorethylen oder Polyketon die mittels elektrostatischer Pulverbeschichtung als Gleitschicht auf das Substrat aufgebracht werden, nach dem Umschmelzprozess einen sehr hohen Kristallinitätsgrad nahe des theoretisch maximal erreichbaren Wertes auf, insbesondere auch an der Oberfläche. Die im Spritzguss beobachtete Spritzhaut, welche sich häufig durch einen hohen amorphen Anteil, aber auch durch Entmischungen möglicher Additive auszeichnet, wird durch Aufbringen mittels Pulverbeschichtung nicht beobachtet. Hierdurch ergibt sich ein ausgezeichneter Verschleißwiderstand, so dass Einlaufeffekte dadurch nahezu vollständig vermieden werden und die Gleitpaarung gleichbleibende Gleiteigenschaften während der gesamten Einsatzzeit zeigt.
In einer vorteilhaften Ausgestaltung ist das Polyoxymethylen ein Polyoxymethylen-Copolymer (POM-C) oder ein Polyoxymethylen-Homopolymer (POM-H). Bevorzugt wird POM-C oder POM-H als Gleitschicht eingesetzt. POM-C hat einen Kristallinitätsgrad von ca. 75 % und weist eine besonders hohe Zähigkeit und Abriebfestigkeit auf. Kommt das Polyoxymethylen als Gleitkörper zum Einsatz, so ist POM-H eine vorteilhafte Wahl, da der theoretische Kristallinitätsgrad von POM-H sogar noch höher bei ca. 90 % liegt und damit ein Hybridwerkstoff von besonders hoher Härte und Festigkeit geschaffen wird. Dadurch weist das Gleitlager eine hohe Lebensdauer auf. Als Alternative zum POM kann auch ein Polybutylenterephthalat zum Einsatz kommen, insbesondere, wenn sein höherer Schmelzpunkt gefordert ist. Auf eine Gleithülse aus PBT könnte zum Beispiel ein Elastomer direkt aufvulkanisiert werden.

In einer vorteilhaften Ausgestaltung ist das Polyamid ein aliphatisches Polyamid oder ein teilaromatisches Polyamid. Ein aus der Gruppe der Polyamide verwendeter Gleitreibpartner ist kostengünstig, gegen Polyoxymethylen als Reibpartner besonders verschleißresistent und weist in dieser Kombination gute Gleiteigenschaften auf. Aliphatische Polyamide können Polyamid 6 (PA6), Polyamid 12 (PA12), Polyamid 46 (PA46), Polyamid 66 (PA66) oder Polyamid 666 (PA666) sein.

In einer vorteilhaften Ausgestaltung weist die Gleitschicht und/oder der zweite Gleitkörper wenigstens ein Additiv auf. Dadurch werden die Gleiteigenschaften der Gleitschicht verbessert.

In einer vorteilhaften Ausgestaltung weist das Polyamid und/oder das Polyoxymethylen und/oder das Polybutylenterephthalat und/oder das Polyketon wenigstens ein Additiv auf. Dadurch werden die tribologischen Eigenschaften der Gleitpaarung weiter verbessert. Zudem verbessern Additive die mechanischen und/oder thermischen Eigenschaften des Kunststoffs. Vorteilhaft ist das wenigstens eine Additiv derart in die die kontinuierliche Schicht bildende polymere Gleitschicht eingearbeitet, dass das Additiv auch in der Oberfläche der kontinuierlichen Gleitschicht angeordnet ist und so dort sofort tribologisch aktiv werden kann. Dieses kann dadurch erreicht werden, dass das Kunststoffpulver für die Gleitbeschichtung ein Compound aus Polyamid beziehungsweise Polyoxymethylen, Polybutylenterephthalat oder Polyketon und des Additivs beziehungsweise der Additive ist.

In einer vorteilhaften Ausgestaltung weist das Additiv Polytetrafluorethylen (PTFE), Molybdändisulfid (MoS2), Silikonöle, Grafit, Graphene, Kohlenstoffnanofasern und/oder Kohlenstoffnanotubes auf. Ferner kann das Additiv Kohlenstofffasern, Aramidfasern, Bornitrit Mineralien, Talkum, Öle, Wachse, Glaskugeln und/oder Glasfasern aufweisen. Die Additive verbessern die tribologischen Notlaufeigenschaften im Trockenlauf oder optimieren andere mechanische Eigenschaften ohne die tribologischen Eigenschaften wesentlich negativ zu beeinflussen. Die Additive werden in einem der Pulverbeschichtung vorgeschalteten Prozessschritt mit der polymeren Hauptkomponente mittels Compoundierung vermischt, homogenisiert, gemahlen und anschließend als Pulver bereit gestellt. Wird dieses Pulver in einem elektrostatischen Pulverbeschichtungsprozess auf den Gleitkörper aufgebracht, so kann eine sehr homogene Verteilung der Additive bis in die Randschicht in Kombination mit einem hohen Kristallinitätsgrad der Randschicht erreicht werden. Die Gefahr der Entmischung, wie sie zum Beispiel bei Lackierprozessen oder Pulverbeschichtungsprozessen auf Basis von Duromeren besteht, entfällt nahezu vollständig hierdurch. Ebenfalls die Tendenz, dass sich eine für Spritzgussverfahren typische, amorphe Randschicht einstellt. Hierdurch hat die Gleitpaarung während der gesamten Einsatzzeit gleichmäßige tribologische Eigenschaften.

In einer vorteilhaften Ausgestaltung weist der Kunststoff an der Oberfläche der Gleitschicht einen Kristallinitätsgrad von mindestens 80 % seines maximalen theoretischen Wertes auf.

In einer vorteilhaften Ausgestaltung ist zwischen der Trägerschicht und der Gleitschicht eine Haftschicht angeordnet. Die Haftschicht sorgt für eine verbesserte Haftung der Gleitschicht auf der Trägerschicht. Die Haftschicht kann vorliegend auch als Primerschicht bezeichnet werden. In vorteilhafter Ausgestaltung basiert die Haftschicht auf einem Epoxidharz.

In einer vorteilhaften Ausgestaltung ist die Gleitschicht mittels Lackieren oder Pulverbeschichtung auf die Trägerschicht aufgebracht. Vorteilhaft wird beim Pulverbeschichten eine Gleitschicht aus Polyamid, Polyoxymethylen, Polytetrafluorethylen (PTFE), Polyketon oder Polybutylenterephthalat auf die Trägerschicht aufgebracht. Durch die sich einstellende Morphologie der tribologisch belasteten Polymerschicht können hohe Kristallinitätsgrade eingestellt werden, die zu einer geringeren Verschleißrate führen.

Die Gleitschicht wird bevorzugt mittels eines elektrostatischen Pulverbeschichtungsverfahrens aufgebracht. Dadurch kann kostengünstig eine homogene, kontinuierliche Gleitschicht aus Polyoxymethylen, Polyamid, Polyketon, Polytetrafluorethylen oder Polybutylenterephthalat auf die Trägerschicht aufgebracht werden. Wird eine Gleitschicht aus einem der genannten Thermoplaste mittels eines elektrostatischen Pulverbeschichtungsprozesses aufgebracht, so ist eine statistische Verteilung der Additive derart zu erreichen, dass die Additive auch im Neuzustand unmittelbar nach der Beschichtung bereits an der Oberfläche der Polymer-Schicht vorzufinden sind. Sie sind dann dort sofort mobil und können nahezu ohne Einlaufeffekte sofort tribologisch aktiv wirken. Ferner führt der elektrostatische Pulverbeschichtungsprozess, bei dem das Pulvergemisch zum Beispiel in einem Umlaufofen aufgeheizt und auf dem Substrat umgeschmolzen wird, während des abschließenden langsamen Abkühlungsvorgangs zu einer gleichmäßigen, kontinuierlichen Polymerschicht mit einem über den gesamten Querschnitt nahezu homogenen Kristallinitätsgrad nahe des theoretischen Maximums. Ferner kann mittels der Pulverbeschichtung eine nahezu geschlossene Polymerschicht auf das Innenrohr aufgebracht werden, die als sehr guter Korrosionsschutz für das Innenrohr dient. Die sich einstellende Rauigkeit ist auf die Kristallitbildung an der Oberfläche zurückzuführen und für die hervorragenden tribologischen Eigenschaften insbesondere in geschmierten Systemen mitverantwortlich. In einer vorteilhaften Ausgestaltung weist die Gleitschicht eine Dicke zwischen ca. 50 µm und ca. 300 µm, insbesondere zwischen ca. 70 µm und ca. 150 µm auf. Dadurch weist die Gleitschicht einen hohen mechanischen Widerstand auf und dient als Korrosionsschutz für das metallische Substrat.

In einer vorteilhaften Ausgestaltung weist der erste Gleitkörper einen Durchbruch auf. Der Durchbruch wird dazu verwendet, um den ersten Gleitkörper für den Pulverbeschichtungsprozess aufhängen zu können. Der Durchbruch kann ein rundes Loch oder die Form einer Hülse aufweisen. Insbesondere weist der Durchbruch auf einer zum Mittelpunkt des Durchbruches gerichteten Seite keine Gleitfläche auf, so dass dieser Bereich zur Aufhängung während eines Pulverbeschichtungsprozesses genutzt werden kann und Defekte in der Beschichtung aufweisen darf. Über den Durchbruch kann der erste Gleitkörper während des Pulverbeschichtungsprozesses auf kostengünstige Art und Weise aufgehängt werden.

In einer vorteilhaften Ausgestaltung ist die Gleitschicht, insbesondere die funktionale Gleitschicht, auf einer dem Gehäuseteil abgewandten Seite der Trägerschicht aufgebracht. Unter funktionaler Gleitschicht wird diejenige Gleitschicht verstanden, die gleitend an dem zweiten Gleitkörper anliegt. Dadurch kann die dem Gehäuseteil zugewandte Seite der Trägerschicht zum Aufhängen des Gleitkörpers für den Pulverbeschichtungsprozess genutzt werden. Vorteilhaft ist die funktionale Gleitschicht im radialen Gleitkörperschnitt auf einer dem Gehäuseteil abgewandten Seite der Trägerschicht aufgebracht. Somit wird im radialen Gleitkörperabschnitt die dem Gehäuseteil zugewandte Seite der Trägerschicht zum Aufhängen für den Pulverbeschichtungsprozess verwendet.

In einer vorteilhaften Ausgestaltung weist der erste Gleitkörper und/oder der zweite Gleitkörper einen axialen Gleitkörperabschnitt zur Aufnahme von Axialkräften und/oder einen radialen Gleitkörperabschnitt zur Aufnahme von Radialkräften auf. Dadurch kann das Gleitlager sowohl axiale als auch radiale Kräfte übertragen. Bevorzugt sind die beiden Gleitkörperabschnitte stoffeinheitlich miteinander verbunden. Die beiden Gleitkörperabschnitte können auch voneinander getrennt sein. Der axiale Gleitkörperabschnitt kann ringscheibenförmig und der radiale Gleitkörperabschnitt kann hülsenförmig ausgebildet sein. Bevorzugt ragt der radiale Gleitkörperabschnitt senkrecht von dem axialen Gleitkörperabschnitt ab. Vorteilhaft sind die axialen Gleitkörperabschnitte den Aufnahmeabschnitten der Gehäuseteile und die radialen Gleitkörperabschnitte den Hülsenabschnitten der Gehäuseteile zugeordnet.

In einer vorteilhaften Ausgestaltung weist der erste Gleitkörper einen ersten Gleitring zur Aufnahme von Radialkräften und/oder der zweite Gleitkörper einen zweiten Gleitring zur Aufnahme von Radialkräften auf. Die Gleitringe können aus einem Polymer, einem Polymercompound, einem Metall oder einem Hybridwerkstoff sein. Wenn die Gleitkörper einen Gleitring aufweisen, dann sind die die Axialkräfte aufnehmenden Abschnitte der Gleitkörper als Ringscheiben ausgebildet.

In einer vorteilhaften Ausgestaltung ist zwischen den Gleitkörpern ein Schmiermittel vorgesehen. Das Schmiermittel verringert die Reibung zwischen den beiden Gleitkörpern und verbessert die Losbrech- sowie Gleiteigenschaften. Da der Kunststoff an der Oberfläche der Gleitschicht einen Kristallinitätsgrad von mindestens 80 % seines maximalen theoretischen Wertes aufweist, weist die Gleitschicht eine raue, unebene Oberfläche auf. Infolgedessen kann sich das Schmiermittel in den Unebenheiten einlagern, so dass die Vertiefungen der Unebenheiten als Schmiermitteldepot dienen.

In einer vorteilhaften Ausgestaltung ist das Schmiermittel ein Fett, das eine Konsistenzkennzahl von zwischen ca. 1 und ca. 4, insbesondere zwischen ca. 2 und ca. 3 aufweist. Die Konsistenzkennzahl bezieht sich vorliegend auf die NLGI-Klasse nach DIN 51818.

In einer vorteilhaften Ausgestaltung ist in den ersten Gleitkörper und/oder in den zweiten Gleitkörper wenigstens eine Aussparung, wenigstens eine Sicke, wenigstens eine Nut und/oder eine Strukturierung, wie beispielweise Erhebungen oder Vorsprünge, eingebracht. Die wenigstens eine Aussparung, die wenigstens eine Sicke, die wenigstens eine Nut und/oder die Strukturierung können als Depot für das Schmiermittel dienen. Dadurch werden die Gleiteigenschaften des Gleitlagers verbessert. Ferner kann die wenigstens eine Aussparung, die wenigstens eine Sicke, die wenigstens eine Nut und/oder die Strukturierung zur Positionierung der beiden Gleitkörper dienen. Die Aussparung kann bei Draufsicht kreisförmig ausgebildet sein. Ferner kann die Aussparung radial umlaufend ausgebildet sein. Darüber hinaus können eine Vielzahl von Aussparungen, Nuten, Sicken in einen der Gleitkörper eingebracht sein, die in äquidistanten Abständen zueinander angeordnet sein können. Ferner ist es auch denkbar, dass wenigstens eine/oder mehrere Aussparungen, Nuten und/oder Sicken in beide Gleitkörper eingebracht sind. Darüber hinaus kann die Aussparung, die Nut und/oder die Sicke eine Breite aufweisen, die näherungsweise der gesamten Breite des Gleitkörpers entspricht. Darüber hinaus kann wenigstens eine Aussparung, wenigstens eine Nut, wenigstens eine Sicke und/oder eine Strukturierung in einen Gleitring eingebracht sein.

In einer vorteilhaften Ausgestaltung ist der erste Gleitkörper und/oder der zweite Gleitkörper formschlüssig, kraftschlüssig und/oder stoffschlüssig mit dem ersten Gehäuseteil und/oder dem zweiten Gehäuseteil verbunden. Die Gleitkörper können in Aufnahmeabschnitte und/oder Hülsenabschnitte der Gehäuseteile eingepresst sein. Ferner können die Gleitkörper mit den Gehäuseteilen verklebt sein. Vorteilhaft sind die beiden Gehäuseteile aus einem faserverstärkten Kunststoff hergestellt. Dadurch kann der aus Kunststoff hergestellte zweite Gleitkörper zusammen mit einem der Gehäuseteile im Zweikomponentenkunststoffspritzguss hergestellt werden.

In einer vorteilhaften Ausgestaltung ist der erste Gleitkörper und/oder der zweite Gleitkörper ringscheibenförmig und/oder hutförmig ausgebildet. Insbesondere wenn die Gleitschicht mittels Pulverbeschichtung auf die Trägerschicht aufgebracht wird, ist es von Vorteil, wenn der Gleitkörper aufgehängt werden kann. Dies erfolgt in der Öffnung beziehungsweise des Durchbruches des als Ringscheibe ausgebildeten Gleitkörpers. Wenn der Gleitkörper eine Hutform aufweist, wird der hülsenförmige Abschnitt dazu verwendet, um den Gleitkörper aufzuhängen. Wenn der erste Gleitkörper und/oder zweite Gleitkörper ringscheibenförmig ausgebildet ist, dann kann zur Aufnahme der Radialkräfte ein zusätzlicher Gleitring vorgesehen sein. Der Gleitring bildet dann den radialen Gleitkörperabschnitt des ersten Gleitkörpers und/oder des zweiten Gleitkörpers. Der Gleitring kann aus dem ersten Werkstoff oder dem Hybridwerkstoff sein.

In einer vorteilhaften Ausgestaltung ist das erste Gehäuseteil und/oder das zweite Gehäuseteil aus Kunststoff. Bevorzugt sind die Gehäuseteile aus einem faserverstärkten Kunststoff hergestellt. Dadurch weist das Gleitlager ein niedriges Gewicht auf und ist zudem kostengünstig in der Herstellung. Darüber hinaus können die beiden Gehäuseteile im Aluminiumdruckguss hergestellt sein.

Ein Verfahren zur Herstellung eines Gleitkörpers aus einem Hybridwerkstoff für ein Gleitlager umfasst folgende Schritte: Zuerst wird eine Trägerschicht bereitgestellt. Die Trägerschicht kann entweder ein Metallband, eine Metallplatte oder ein rohrförmiger metallischer Rohling sein. Die Trägerschicht wird in einen ringscheibenförmigen oder hutförmigen Körper überführt, beispielsweise gestanzt, tiefgezogen, geschnitten und/oder anderweitig umgeformt oder mittels eines Drehprozesses. Der ringscheibenförmige Körper braucht explizit nicht flach zu sein, sondern kann beispielsweise innen und/oder außen einen tiefgezogenen Kragen, wenigstens eine Aussparung, wenigstens eine Nut, wenigstens eine Sicke und/oder eine Strukturierung zur Positionierung und/oder als Depot für ein Schmiermittel aufweisen. Anschließend wird auf die Trägerschicht ein die Gleitschicht bildender, pulverförmiger Kunststoff oder pulverförmiger Kunststoffcompound mittels elektrostatischer Pulverbeschichtung aufgetragen. Schließlich wird der die Gleitschicht bildende Kunststoff oder Kunststoffcompound aufgeschmolzen und abgekühlt. Aufgrund der elektrostatischen Pulverbeschichtung ist es möglich, eine metallische Trägerschicht zunächst in ihre Endgeometrie zu überführen und anschließend die Trägerschicht in ihrer finalen Geometrie zu beschichten. Dadurch ist das Beschichtungsverfahren im Gegensatz zum Coil-Coating unabhängig von der Geometrie der Trägerschicht beziehungsweise von der Geometrie des ringscheibenförmigen Körpers, da keine Umformung der Beschichtung stattfindet. Da die Gleitschicht die Trägerschicht vollständig umgibt, sind die Schnittkanten und/oder Umformkanten vor Korrosion geschützt. Dadurch ist es möglich, einen unlegierten Stahl als Trägerschicht zu verwenden. Zur Pulverbeschichtung wird die Trägerschicht vorteilhaft aufgehängt. Vorteilhafterweise wird die Trägerschicht im Bereich eines Durchbruches aufgehängt. Unter ringscheibenförmig wird vorliegend eine weitestgehend rotationssymmetrische Form verstanden, die mindestens eine kreisförmige Gleitfläche beinhaltet, auf der ein zweiter Gleitkörper mindestens teilweise rotieren kann. Explizit kann die ringscheibenförmige Form aber auch nicht kreisförmige Merkmale aufweisen wie beispielsweise wenigstens eine Aussparung, wenigstens eine Sicke und/oder wenigstens eine Nute zur Ausrichtung der Ringscheibe.

Bei dem Verfahren kann die metallische Trägerschicht vorbehandelt werden. Insbesondere kann die Trägerschicht gereinigt werden, um Fett, Rost und/oder Schmutz von der Oberfläche der Trägerschicht zu entfernen und damit die Haftung der Gleitschicht oder des Haftvermittlers auf der Trägerschicht zu verbessern.

Vor dem Auftragen des Kunststoffes auf die metallische Trägerschicht kann eine Haftschicht aufgebracht werden. Die Haftschicht verbessert die Haftung des Kunststoffes oder Kunststoffcompounds auf der Trägerschicht.

Des Weiteren betrifft die Erfindung ein Verfahren zur Herstellung eines Gleitlagers. Das Verfahren umfasst folgende Verfahrensschritte. Zuerst werden ein erstes Gehäuseteil und ein zweites Gehäuseteil aus Kunststoff spritzgegossen. Anschließend wird ein erster Gleitkörper mit dem ersten Gehäuseteil und ein zweiter Gleitkörper mit dem zweiten Gehäuseteil verbunden, wobei der Gleitkörper wie oben beschrieben hergestellt wird. Schließlich werden die beiden Gehäuseteile verbunden, so dass die beiden Gleitkörper gleitend aneinanderliegen.

Nachfolgend werden das Gleitlager sowie weitere Merkmale und Vorteile anhand von Ausführungsbeispielen näher erläutert, die in den Figuren schematisch dargestellt sind. Hierbei zeigen:
- Fig. 1: einen Längsschnitt durch ein Gleitlager gemäß einer ersten Ausführungsform;
- Fig. 2: eine vergrößerte Darstellung eines Schnittes durch einen Hybridwerkstoff;
- Fig. 3: eine schematische Darstellung der Gleitschicht, die die Trägerschicht vollständig umgibt;
- Fig. 4: einen Längsschnitt durch ein Gleitlager gemäß einer zweiten Ausführungsform;
- Fig. 5: einen Längsschnitt durch ein Gleitlager gemäß einer dritten Ausführungsform;
- Fig. 6: einen Längsschnitt durch ein Gleitlager gemäß einer vierten Ausführungsform;
- Fig. 7: einen Längsschnitt durch ein Gleitlager gemäß einer fünften Ausführungsform;
- Fig. 8: einen Längsschnitt durch ein Gleitlager gemäß einer sechsten Ausführungsform;
- Fig. 9: einen Längsschnitt durch ein Gleitlager gemäß einer siebten Ausführungsform; und
- Fig. 10: einen Längsschnitt durch ein Gleitlager gemäß einer achten Ausführungsform.

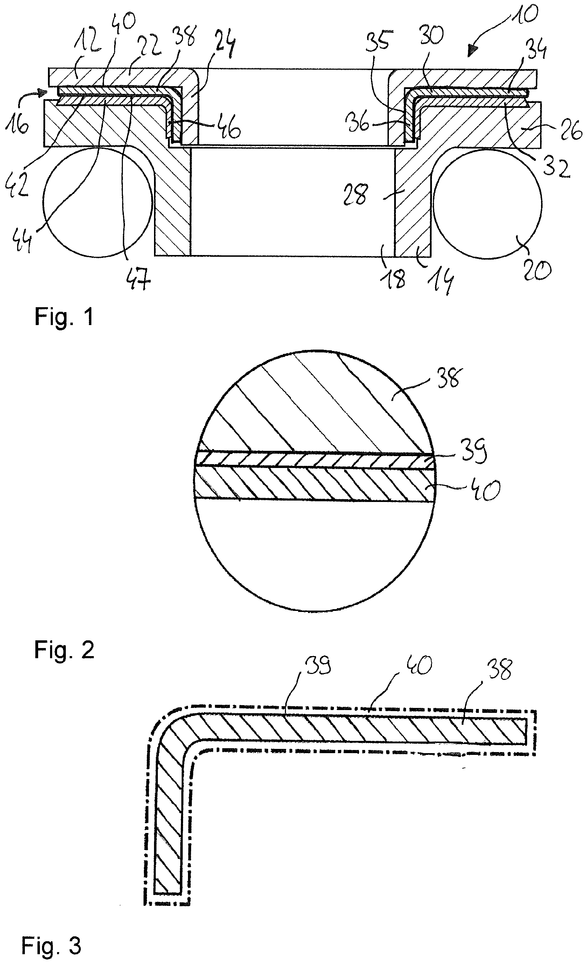

In Figur 1 ist ein Gleitlager 10 gezeigt, welches durch eine Feder 20 belastet wird, die Teil eines nicht dargestellten Federbeines, insbesondere eines McPherson-Federbeines sein kann, um eine Rotation zwischen einer nicht dargestellten Fahrzeugkarosserie und der Feder zu ermöglichen.

Das Gleitlager 10 weist ein erstes Gehäuseteil 12, ein zweites Gehäuseteil 14 und eine zwischen den beiden Gehäuseteilen 12, 14 angeordnete Gleitlagervorrichtung 16 auf.

Die beiden Gehäuseteile 12, 14 können aus einem Kunststoff, insbesondere aus einem faserverstärktem Kunststoff oder mittels Aluminiumdruckguss hergestellt sein und bilden eine zentrale Öffnung 18, die zur Aufnahme eines Abschnitts eines nicht dargestellten Stoßdämpfers eines Federbeins dienen kann. Das erste Gehäuseteil 12 stützt sich an einer nicht dargestellten Fahrzeugkarosserie ab. Das zweite Gehäuseteil 14 stützt sich auf der Feder 20 ab. Über die Gleitlagervorrichtung 16 sind die beiden Gehäuseteile 12, 14 relativ zueinander verdrehbar.

Statt der Feder 20 kann sich an das untere Gehäuseteil 14 auch eine nicht dargestellte Luftfeder anschießen. In dem Fall kann das untere Gehäuseteil 14 zum Beispiel Teil eines Abrollkolbens der Luftfeder sein.

Das erste Gehäuseteil 12 weist einen ersten Auflageabschnitt 22 und einen ersten Hülsenabschnitt 24 auf, der senkrecht von dem ersten Auflageabschnitt 22 abragt. Das zweite Gehäuseteil 14 weist einen zweiten Auflageabschnitt 26 und einen zweiten Hülsenabschnitt 28 auf, der senkrecht von dem zweiten Auflageabschnitt 26 abragt. Die Feder 20 liegt an dem zweiten Auflageabschnitt 26 und dem zweiten Hülsenabschnitt 28 an. Die beiden Hülsenabschnitte bilden die zentrale Öffnung 18, wobei ein Abschnitt des ersten Hülsenabschnitts 24 in das zweite Gehäuseteil 14 eingesetzt ist.

Die Gleitlagervorrichtung 16 weist einen ersten Gleitkörper 30 und einen zweiten Gleitkörper 32 auf.

Der erste Gleitkörper 30 ist hutförmig und weist einen ersten axialen Gleitkörperabschnitt 34 zur Aufnahme der auf das Gleitlager 10 wirkenden Axialkräfte und einen ersten radialen Gleitkörperabschnitt 36 zur Aufnahme der auf das Gleitlager 10 wirkenden Radialkräfte auf. Der erste radiale Gleitkörperabschnitt 36 ragt senkrecht von dem axialen Gleitkörperabschnitt 34 ab und weist einen kreisförmigen Durchbruch 35 auf. Wie in Figur 1 ersichtlich ist, liegt der erste axiale Gleitkörperabschnitt 34 an dem ersten Auflageabschnitt 22 und der erste radiale Gleitkörperabschnitt 36 an dem ersten Hülsenabschnitt 24 an. Der erste Gleitkörper 30 kann formschlüssig, kraftschlüssig und/oder stoffschlüssig mit dem ersten Gehäuseteil 12 verbunden sein.

Der erste Gleitkörper 30 ist aus einem Hybridwerkstoff, der als ein Schichtverbund ausgebildet ist. Durch den als Schichtverbund ausgebildeten Hybridwerkstoff weist der erste Gleitkörper 30 eine Trägerschicht 38, eine Haftschicht 39 und eine Gleitschicht 40 auf, wie insbesondere in Fig. 2 dargestellt ist. Die Trägerschicht 38 ist aus einem Metall und liegt an dem ersten Gehäuseteil 12 an. Die Haftschicht 39 basiert beispielsweise auf einem Epoxidharz. Wie in Fig. 3 schematisch dargestellt ist, umgibt die Gleitschicht 40 und die Haftschicht 39 (beides zusammen gestrichelt dargestellt) die Trägerschicht 38 vollständig.

Die Gleitschicht (40) weist eine erste Gleitfläche 42 auf und bildet dabei eine kontinuierliche Polymerschicht auf der Trägerschicht 38 aus, wobei die Gleitschicht 40 aus Polyamid (PA), Polyoxymethylen (POM), Polyketon (PK), Polytetrafluorethylen (PTFE), Polyethylenterephthalate (PET) oder Polybutylenterephthalat (PBT) ist, und mit tribologischen Additiven versehen sein kann.

Das Polyoxymethylen kann ein Polyoxymethylen-Copolymer (POM-C) oder ein Polyoxymethylen-Homopolymer (POM-H) sein. Das Polyamid kann ein aliphatisches Polyamid oder ein teilaromatisches Polyamid sein. Aliphatische Polyamide können Polyamid 6 (PA6), Polyamid 12 (PA12), Polyamid 46 (PA46), Polyamid 66 (PA66) oder Polyamid 666 (PA666) sein.

Das Additiv kann PTFE, Molybdändisulfid (MoS2), Grafit, Graphene, Kohlenstoffnanofasern, Kohlenstofffasern, Aramidfasern, Bornitrit Mineralien, Talkum, Öle, Wachse, Glaskugeln, Glasfasern und/oder Kohlenstoffnanotubes aufweisen. Das Additiv kann derart statistisch in der Gleitschicht 40 eingebettet, dass das Additiv auch direkt an der Oberfläche der Gleitschicht 40 angeordnet ist und somit sofort tribologisch wirksam werden kann.

Die Gleitschicht 40 kann mittels Lackieren oder elektrostatischer Pulverbeschichtung auf die Trägerschicht 38 aufgetragen sein. Wenn die Gleitschicht 40 mittels elektrostatischer Pulverbeschichtung aufgebracht wird, dann wird der Durchbruch 35 dazu verwendet, um den ersten Gleitkörper 30 aufzuhängen. Insbesondere wird die den Durchbruch 35 bildende Innenseite des radialen Gleitkörperabschnitts 36 zum Aufhängen verwendet. Die Innenseite kann ebenfalls mit einer Gleitschicht versehen sein, die jedoch, da sie nicht als funktionale Gleitschicht dient, Defekte aufweisen kann. Die mittels elektrostatischer Pulverbeschichtung auf die Haftschicht aufgebrachte Gleitschicht 40 weist bevorzugt eine Dicke zwischen ca. 50 µm und ca. 300 µm, insbesondere zwischen ca. 80 µm und ca. 200 µm auf.

Der zweite Gleitkörper 32 ist hutförmig und weist einen zweiten axialen Gleitkörperabschnitt 44 zur Aufnahme der auf das Gleitlager 10 wirkenden Axialkräfte und einen zweiten radialen Gleitkörperabschnitt 46 zur Aufnahme der auf das Gleitlager 10 wirkenden Radialkräfte auf, der senkrecht von dem zweiten axialen Gleitkörperabschnitt 44 abragt.

Der zweite Gleitkörper 32 ist aus Kunststoff oder Kunststoffcompound, insbesondere aus teilkristallinem Kunststoff als Basispolymer, hergestellt und stoffschlüssig mit dem zweiten Gehäuseteil 14 verbunden, wobei der zweite axiale Gleitkörperabschnitt 44 in den zweiten Auflageabschnitt 26 und der zweite radiale Gleitkörperabschnitt 46 in den zweiten Hülsenabschnitt 28 eingebettet ist. Der zweite Gleitkörper 32 weist eine zweite Gleitfläche 47 auf, die gleitend an der ersten Gleitfläche 32 anliegt, so dass die beiden Gleitkörper 30, 32 gegeneinander gleiten, wenn die beiden Gehäuseteile 12, 14 gegeneinander verdreht werden.

Wenn die Gleitschicht 40 aus Polyamid ist, dann ist der zweite Gleitkörper 32 aus Polyoxymethylen, Polyethylenterephthalate, Polybutylenterephthalate oder Polyketon. Wenn die Gleitschicht 40 aus Polyoxymethylen ist, dann ist der zweite Gleitkörper aus Polyamid, Polyethylenterephthalate, Polybutylenterephthalate oder Polyketon. Wenn die Gleitschicht 40 aus Polybutylenterephthalate ist, dann ist der zweite Gleitkörper 32 aus Polyoxymethylen, Polyamid, oder Polyketon. Wenn die Gleitschicht 40 aus Polyketon ist, dann ist der zweite Gleitkörper 32 aus Polyamid, Polyethylenterephthalate, Polybutylenterephthalate oder Polyoxymethylen, kann aber auch aus Polyketon sein.

Darüber hinaus kann der zweite Gleitkörper 32 ebenfalls ein Additiv aufweisen. Das Additiv kann Polytetrafluorethylen (PTFE), Graphit, Bornitrit, Kohlenstoffnanofasern, Kohlenstofffasern, Aramidfasern, Mineralien, Molybdändisulfid, Talkum, Öle, Wachse, Glaskugeln und/oder Glasfasern sein.

Das zweite Gehäuseteil 14 und der zweite Gleitkörper 32 können im Zweikomponenten-Kunststoffspritzgussverfahren hergestellt sein. Hierzu wird zunächst das zweite Gehäuseteil 14 spritzgegossen, und anschließend wird der zweite Gleitkörper 32 an das zweite Gehäuseteil 14 angespritzt und mit selbigem stoffschlüssig verbunden.
Im Folgenden wir ein mögliches Verfahren zur Herstellung des ersten Gleitkörpers 30 sowie ein Verfahren zur Herstellung des Gleitlagers 10 beschrieben.

Zur Herstellung des ersten Gleitkörpers 30 wird zunächst entweder eine flächige, metallische Trägerschicht 38 oder als Trägerschicht 38 ein rohrförmiger metallischer Rohling bereitgestellt. Die Trägerschicht wird in einen ringscheibenförmigen Körper überführt, beispielsweise gestanzt, tiefgezogen, geschnitten und/oder anderweitig umgeformt oder mittels eines Drehprozesses. Dieser ringscheibenförmige Körper braucht explizit nicht flach zu sein, sondern kann beispielsweise innen und/oder außen einen tiefgezogenen Kragen, wenigstens eine Aussparung, wenigstens eine Nut und/oder wenigstens eine Sicken zur Positionierung und/oder als Depot für ein Schmiermittel oder auf der späteren Gleitfläche eine Strukturierung aufweisen. Anschließend wird die zu einem ringscheibenförmigen Körper umgeformte Trägerschicht 38 vorbehandelt beziehungsweise gereinigt, um Fett, Rost und/oder Schmutz von der Oberfläche der Trägerschicht 38 zu entfernen. Im Anschluss daran wird auf die metallische Trägerschicht 38 eine Haftschicht 39 aufgebracht. Danach wird die Trägerschicht 38 im Bereich des Durchbruches 35 aufgehängt, und ein die Gleitschicht 40 bildender, pulverförmiger Kunststoff oder pulverförmiger Kunststoffcompound wird mittels elektrostatischer Pulverbeschichtung auf die Trägerschicht 38 aufgetragen. Abschließend wird der die Gleitschicht 40 bildende Kunststoff oder Kunststoffcompound aufgeschmolzen und abgekühlt.

Zur Herstellung des Gleitlagers 10 werden zunächst die beiden Gehäuseteile 12, 14 aus Kunststoff spritzgegossen. Anschließend wird der der zweite Gleitkörper 32 an das zweite Gehäuseteil 14 angespritzt und mit selbigem stoffschlüssig und/oder formschlüssig verbunden. Danach wird der erste Gleitkörper 30 formschlüssig, kraftschlüssig und/oder stoffschlüssig mit dem ersten Gehäuseteil 12 verbunden. Schließlich werden die beiden Gehäuseteile 12, 14 derart miteinander verbunden, dass die beiden Gleitkörper 30, 32 gleitend aneinanderliegen.

Ferner ist es nicht zwingend erforderlich, den zweiten Gleitkörper 32 an das zweite Gehäuseteil 14 anzuspritzen, sondern der zweite Gleitkörper kann auch einfach in das zweite Gehäuseteil 14 eingelegt werden. Auch ist es nicht notwendigerweise so, dass der erste Gleitkörper 30 in das erste Gehäuseteil 12 eingelegt wird, sondern der erste Gleitkörper 30 könnte, nachdem ein Schmiermittel auf einen der Gleitkörper 30, 32 aufgebracht wurde, auf den zweiten Gleitkörper 32 locker montiert werden und anschließend wird die erste Gehäusehälfte 12 auf die zweite Gehäusehälfte abgesenkt werden. Dadurch wird der erste Gleitkörper 30 formschlüssig zwischen den beiden Gehäusehälften 12, 14 aufgenommen.

Im Folgenden werden weitere Ausführungsformen für das Gleitlager 10 beschriebe, wobei für gleiche und funktionsgleiche Teile dieselben Bezugszeichen verwendet werden.

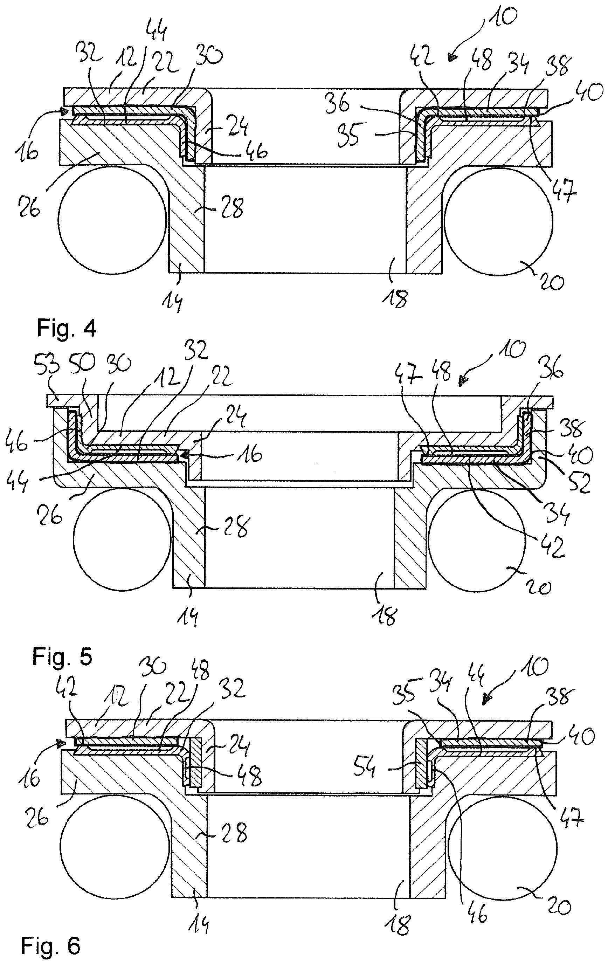

In Figur 4 ist eine zweite Ausführungsform des Gleitlagers 10 gezeigt, die sich von der ersten Ausführungsform dadurch unterscheidet, dass der zweite Gleitkörper 32 Aussparungen 48 aufweist, die als Schmiermitteldepot dienen. Die Aussparung 48 erstreckt sich näherungsweise über die gesamte Breite des zweiten Gleitkörpers 32 und ist vorliegend als eine Vielzahl strahlenförmiger Nuten ausgebildet. Darüber hinaus kann die Aussparung 48 als eine umlaufende Ringnut ausgebildet sein. Ferner sind auch mehrere umlaufende Ringnuten denkbar. Zudem können die Aussparungen 48 eine runde, ovale oder eine beliebige Kontur aufweisen. Ferner können unterschiedlich konturierte Aussparungen 48 im zweiten Gleitkörper 32 eingebracht sein.

In Figur 5 ist eine dritte Ausführungsform des Gleitlagers 10 gezeigt, das sich von den ersten beiden Ausführungsformen dadurch unterscheidet, dass die beiden radialen Gleitkörperabschnitte 36, 46 radial außen angeordnet sind und nach oben, das heißt von der Feder 20 weg ragen. Hierzu liegt der erste Gleitkörper 30 an dem zweiten Gehäuseteil 14 und der zweite Gleitkörper 32 liegt an dem ersten Gehäuseteil 12 an.

Zur Abstützung der beiden radialen Gleitkörperabschnitte 36, 46 weist das erste Gehäuseteil 12 einen dritten Hülsenabschnitt 50 auf, in den der radiale Gleitkörperabschnitt 46 des zweiten Gleitkörpers 32 formschlüssig und/oder stoffschlüssig eingebettet ist. Das zweite Gehäuseteil 14 weist einen vierten Hülsenabschnitt 52 auf, an dem der radiale Gleitkörperabschnitt 36 des ersten Gleitkörpers 30 anliegt. Zur Abdichtung der Gleitlagervorrichtung 16 weist das erste Gehäuseteil 12 einen Bundabschnitt 53 auf, der zusammen mit dem vierten Hülsenabschnitt 52 eine Dichtung, zum Beispiel eine nicht dargestellte Labyrinthdichtung, ausbilden kann. Da die Schnittkante des kreisförmigen Durchbruchs des ersten Gleitkörpers 30 keine Funktionsfläche darstellt, kann der Durchbruch zur Aufhängung des Bauteiles während des Pulverbeschichtungsprozesses verwendet werden.

In Figur 6 ist eine vierte Ausführungsform des Gleitlagers 10 gezeigt, das sich von den anderen Ausführungsformen dadurch unterscheidet, dass der erste Gleitkörper 32 ringscheibenförmig ist und der erste radiale Gleitkörperabschnitt 36 aus einem separaten ersten Gleitring 54 gebildet ist. Der ringscheibenförmige erste Gleitkörper 32 ist vorliegend aus Metall gestanzt und wird über den Durchbruch 35 zur elektrostatischen Pulverbeschichtung aufgehängt. Da die Gleitschicht 40 die Trägerschicht 38 vollständig umgibt, sind die Schnittkanten vor Korrosion geschützt.

Zur Verbesserung der Gleiteigenschaften zwischen dem ersten Gleitring 54 und dem zweiten radialen Gleitkörperabschnitt sind in den zweiten radialen Gleitkörperabschnitt 46 Aussparungen 48 eingebracht, die als Schmiermitteldepot dienen. Der erste Gleitring 54 kann aus einem Polymer, einem Polymercompound, einem Metall oder einem Hybridwerkstoff sein.

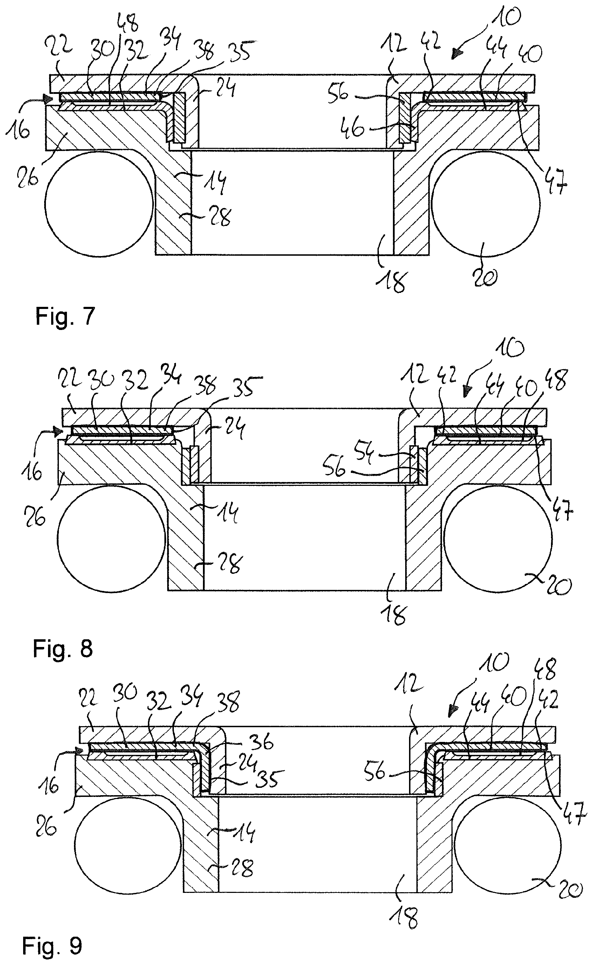

In Figur 7 ist eine fünfte Ausführungsform des Gleitlagers 10 gezeigt, die sich von der vierten Ausführungsform dadurch unterscheidet, dass in dem zweiten radialen Gleitkörperabschnitt 46 keine Aussparungen 48 eingebracht sind.

In Figur 8 ist eine sechste Ausführungsform des Gleitlagers 10 gezeigt, die sich von den anderen Ausführungsformen dadurch unterscheidet, dass die beiden Gleitkörper 30, 32 ringscheibenförmig sind. Der erste Gleitkörper 35 weist den Durchbruch 35 auf, über den die Trägerschicht 38 zur elektrostatischen Pulverbeschichtung aufgehängt wird. Die radialen Gleitkörperabschnitte 36, 46 sind aus dem separaten ersten Gleitring 54 und einem separaten zweiten Gleitring 56 gebildet. Die beiden Gleitringe 54 können aus einem Polymer, einem Polymercompound, einem Metall oder einem Hybridwerkstoff sein.

In Figur 9 ist eine siebte Ausführungsform des Gleitlagers 10 gezeigt, die sich von der ersten Ausführungsform dadurch unterscheidet, dass der zweite radiale Gleitkörperabschnitt 46 aus dem zweiten Gleitring 56 gebildet ist, an dem der erste radiale Gleitkörperabschnitt 34, insbesondere die Gleitschicht 40, gleitend anliegt.

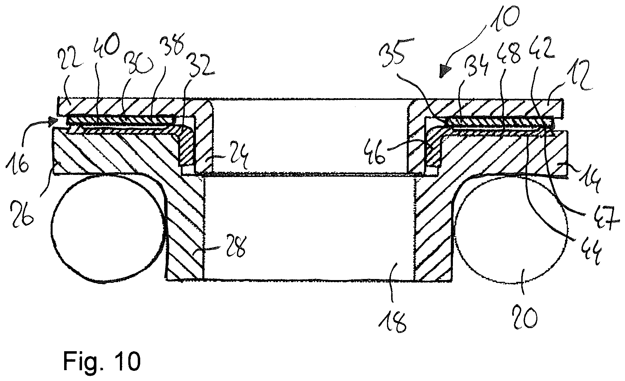

In Fig. 10 ist eine achte Ausführungsform des Gleitlagers 10 gezeigt, die sich von den anderen Ausführungsformen dadurch unterscheidet, dass der erste Gleitkörper 30 keinen radialen Gleitkörperabschnitt 30 aufweist. Diese Variante ist im Vergleich zu den anderen Ausführungsformen besonders kostengünstig, da die Trägerschicht 38 des ersten Gleitkörpers 30 nicht aus Metall tiefgezogen werden muss, sondern nur beispielsweise gestanzt oder geschnitten werden braucht, um anschließend mittels elektrostatischer Pulverbeschichtung beschichtet zu werden.

### Bezugszeichenliste

- 10: Gleitlager
- 12: erstes Gehäuseteil
- 14: zweites Gehäuseteil
- 16: Gleitlagervorrichtung
- 18: Öffnung
- 20: Feder
- 22: erster Auflageabschnitt
- 24: erster Hülsenabschnitt
- 26: zweiter Auflageabschnitt
- 28: zweiter Hülsenabschnitt
- 30: erster Gleitkörper
- 32: zweiter Gleitkörper
- 34: erster axialer Gleitkörperabschnitt
- 35: Durchbruch
- 36: erster radialer Gleitkörperabschnitt
- 38: Trägerschicht
- 39: Haftschicht
- 40: Gleitschicht
- 42: erste Gleitfläche
- 44: zweiter axialer Gleitkörperabschnitt
- 46: zweiter radialer Gleitkörperabschnitt
- 47: zweite Gleitfläche
- 48: Aussparung
- 50: dritter Hülsenabschnitt
- 52: vierter Hülsenabschnitt
- 53: Bundabschnitt
- 54: erster Gleitring
- 56: zweiter Gleitring

## Patentansprüche

1. Gleitlager (10) für ein Stützlager eines Kraftfahrzeuges, aufweisend ein erstes Gehäuseteil (12), ein zweites Gehäuseteil (14) und eine zwischen den beiden Gehäuseteilen angeordnete Gleitlagervorrichtung (16), wobei die Gleitlagervorrichtung (16) wenigstens einen ersten Gleitkörper (30) und wenigstens einen zweiten Gleitkörper (32) aufweist, **dadurch gekennzeichnet, dass** wenigstens ein Abschnitt des ersten Gleitkörpers (30)
aus einem Hybridwerkstoff ist, wobei der Hybridwerkstoff eine Trägerschicht (38) und eine Gleitschicht (40) aufweist, wobei die Gleitschicht (40) und/oder der zweite Gleitkörper (32) aus Kunststoff oder Kunststoffcompound ist, wobei die Gleitschicht (40) und der zweite Gleitkörper (32) eine Gleitpaarung entweder aus zwei verschiedenen Polymeren aus den Gruppen der Polyamide (PA), der Polyoxymethylene (POM), der Polyketone (PK), der Polytetrafluorethylene (PTFE), der Polyethylenterephthalate (PET) oder der Polybutylenterephthalate (PBT) bilden, oder die Gleitpaarung aus Polyketon gegen Polyketon gebildet wird, wobei die Polymere der Gleitpaarung jeweils in einer kontinuierlichen, thermoplastischen Polymerphase vorliegen.

2. Gleitlager (10) nach Anspruch 1, **dadurch gekennzeichnet, dass** die Gleitschicht (40) gleitend an dem zweiten Gleitkörper (30) anliegt.

3. Gleitlager (10) nach Anspruch 1 oder 2, **dadurch gekennzeichnet, dass** die Trägerschicht (38) aus Metall ist.

4. Gleitlager (10) nach einem der vorhergehenden Ansprüche, **dadurch gekennzeichnet, dass** die Gleitschicht (40) und/oder der zweite Gleitkörper (32) wenigstens ein Additiv aufweist, wobei vorzugsweise das Additiv Polytetrafluorethylen, MoS2, Silikonöle, Grafit, Graphen, Kohlenstoffnanofasern und/oder Kohlenstoffnanotubes aufweist.

5. Gleitlager nach einem der vorhergehenden Ansprüche, **dadurch gekennzeichnet, dass** zwischen der Trägerschicht (38) und der Gleitschicht (40) eine Haftschicht (39) angeordnet ist.

6. Gleitlager (10) nach einem der vorhergehenden Ansprüche, **dadurch gekennzeichnet, dass** die Gleitschicht (40) mittels Lackieren oder Pulverbeschichtung auf die Trägerschicht (38) aufgebracht ist.

7. Gleitlager (10) nach einem der vorhergehenden Ansprüche, **dadurch gekennzeichnet, dass** der erste Gleitkörper (30) wenigstens einen Durchbruch (35) aufweist.

8. Gleitlager (10) nach einem der vorhergehenden Ansprüche, **dadurch gekennzeichnet, dass** der erste Gleitkörper (30) und/oder der zweite Gleitkörper (32) einen axialen Gleitkörperabschnitt (34, 44) zur Aufnahme von Axialkräften und/oder einen radialen Gleitkörperabschnitt (36, 46) zur Aufnahme von Radialkräften aufweist.

9. Gleitlager nach einem der vorhergehenden Ansprüche, **dadurch gekennzeichnet, dass** der erste Gleitkörper (30) einen ersten Gleitring (54) zur Aufnahme von Radialkräften und/oder der zweite Gleitkörper (32) einen zweiten Gleitring (56) zur Aufnahme von Radialkräften aufweist.

10. Gleitlager (10) nach einem der vorhergehenden Ansprüche, **dadurch gekennzeichnet, dass** zwischen den Gleitkörpern (30, 32) ein Schmiermittel vorgesehen ist, wobei vorzugsweise das Schmiermittel ein Fett ist, das eine Konsistenzkennzahl von zwischen ca. 1 und ca. 4, insbesondere zwischen ca. 2 und ca. 3 aufweist.

11. Gleitlager (10) nach Anspruch 10, **dadurch gekennzeichnet, dass** in den ersten Gleitkörper (30) und/oder in den zweiten Gleitkörper (32) wenigstens eine Aussparung (48), wenigstens eine Sicke, wenigstens eine Nut und/oder eine Strukturierung eingebracht ist.

12. Gleitlager (10) nach einem der vorhergehenden Ansprüche, **dadurch gekennzeichnet, dass** der erste Gleitkörper (30) und/oder der zweite Gleitkörper (32) formschlüssig, kraftschlüssig und/oder stoffschlüssig mit dem ersten Gehäuseteil (12) und/oder dem zweiten Gehäuseteil (14) verbunden ist.

13. Gleitlager (10) nach einem der vorhergehenden Ansprüche, **dadurch gekennzeichnet, dass** der erste Gleitkörper (30) und/oder der zweite Gleitkörper (32) ringscheibenförmig und/oder hutförmig ausgebildet ist.

14. Gleitlager (10) nach einem der vorhergehenden Ansprüche, **dadurch gekennzeichnet, dass** das erste Gehäuseteil (12) und/oder das zweite Gehäuseteil (14) aus Kunststoff ist.

15. Verfahren zur Herstellung eines Gleitlagers nach einem der Ansprüche 1 bis 14, das folgende Verfahrensschritte umfasst:
a. Spritzgießen eines ersten Gehäuseteiles (12) und eines zweiten Gehäuseteils (14) aus Kunststoff;
b. Formschlüssiges, kraftschlüssiges und/oder stoffschlüssiges Verbinden eines Gleitkörpers (30) mit dem ersten Gehäuseteil (12) und eines zweiten Gleitkörpers (32) aus Kunststoff mit dem zweiten Gehäuseteil (14), wobei der Gleitkörper (30) der nach folgendem Verfahren hergestellt wird:
i.Bereitstellen einer Trägerschicht (38);
ii.Überführen der Trägerschicht (38) zu einem ringscheibenförmigen oder hutförmigen Körper;
iii.Auftragen eines die Gleitschicht (40) bildenden, pulverförmigen Kunststoffs oder pulverförmigen Kunststoffcompounds auf die Trägerschicht (38) mittels elektrostatischer Pulverbeschichtung; und
iv.Aufschmelzen und Abkühlen des die Gleitschicht (40) bildenden Kunststoffs oder Kunststoffcompounds; und
c. Verbinden der beiden Gehäuseteile (12, 14), so dass die beiden Gleitkörper (30, 32) gleitend aneinanderliegen.

## Claims

1. Slide bearing (10) for a support mount of a motor vehicle, having a first housing part (12), a second housing part (14) and a slide bearing device (16) arranged between the two housing parts, the slide bearing device (16) having at least one first sliding body (30) and at least one second sliding body (32),
**characterised in that** at least a portion of the first sliding body (30) is made of a hybrid material, the hybrid material having a carrier layer (38) and a sliding layer (40), wherein the sliding layer (40) and/or the second sliding body (32) is made of a plastic or a plastic compound, wherein the sliding layer (40) and the second sliding body (32) are a tribological pairing either of two different polymers from the groups of polyamides (PA), polyoxymethylenes (POM), polyketones (PK), polytetrafluoroethylenes (PTFE), polyethylene terephthalates (PET) or polybutylene terephthalates (PBT), or the sliding pairing is formed from polyketone against polyketone, the polymers of the tribological pairing each being present in a continuous, thermoplastic polymer phase.

2. Slide bearing (10) according to claim 1, **characterised in that** the sliding layer (40) bears in sliding contact against the second sliding body (30).

3. Slide bearing (10) according to claim 1 or 2, **characterised in that** the carrier layer (38) is made of metal.

4. Slide bearing (10) according to any one of the preceding claims, **characterised in that** the sliding layer (40) and/or the second sliding body (32) has at least one additive, the additive preferably including polytetrafluoroethylene, MoS2, silicone oils, graphite, graphene, carbon nanofibres and/or carbon nanotubes.

5. Slide bearing according to any one of the preceding claims, **characterised in that** an adhesive layer (39) is arranged between the carrier layer (38) and the sliding layer (40).

6. Slide bearing (10) according to any one of the preceding claims, **characterised in that** the sliding layer (40) is applied to the carrier layer (38) by means of finishing or powder coating.

7. Slide bearing (10) according to any of the preceding claims, **characterised in that** the first slide body (30) has at least one cut-out (35).

8. Slide bearing (10) according to any one of the preceding claims, **characterised in that** the first sliding body (30) and/or the second sliding body (32) has an axial sliding body section (34, 44) for absorbing axial forces and/or a radial sliding body section (36, 46) for absorbing radial forces.

9. Slide bearing according to any one of the preceding claims, **characterised in that** the first sliding body (30) has a first sliding ring (54) for absorbing radial forces and/or the second sliding body (32) has a second sliding ring (56) for absorbing radial forces.

10. Slide bearing (10) according to any one of the preceding claims, **characterised in that** a lubricant is provided between the sliding bodies (30, 32), wherein preferably the lubricant is a grease having a consistency index of between approximately 1 and approximately 4, in particular between approximately 2 and approximately 3.

11. Slide bearing (10) according to claim 10, **characterised in that** at least one recess (48), at least one bead, at least one groove and/or one structuring is introduced into the first sliding body (30) and/or into the second sliding body (32).

12. Slide bearing (10) according to any one of the preceding claims, **characterised in that** the first sliding body (30) and/or the second sliding body (32) is connected to the first housing part (12) and/or the second housing part (14) in a positive, non-positive and/or substance-to-substance connection.

13. Slide bearing (10) according to any one of the preceding claims, **characterised in that** the first sliding body (30) and/or the second sliding body (32) is of annular disc-shaped and/or hat-shaped design.

14. Slide bearing (10) according to any one of the preceding claims, **characterised in that** the first housing part (12) and/or the second housing part (14) is made of plastic.

15. Method for producing a slide bearing according to any one of claims 1 to 14, comprising the following method steps:
a. injection moulding of a first housing part (12) and a second housing part (14) made of plastic;
b. generating a positive, non-positive and/or substance-to-substance connection of a sliding body (30) to the first housing part (12) and of a second sliding body (32) made of plastic to the second housing part (14), the sliding body (30) being produced by the following method:
i. providing a carrier layer (38);
ii. transferring the carrier layer (38) to an annular disc-shaped or hat-shaped body;
iii. applying a powdered plastic or powdered plastic compound forming the sliding layer (40) onto the carrier layer (38) by means of electrostatic powder coating; and
iv. melting and cooling the plastic or plastic compound forming the sliding layer (40); and
c. connecting the two housing parts (12, 14) so that the two sliding bodies (30, 32) bear against each other in sliding contact.

## Revendications

1. Palier coulissant (10) pour un support d'un véhicule automobile, comportant une première partie de boîtier (12), une seconde partie de boîtier (14) et un dispositif de palier coulissant (16) disposé entre les deux parties de boîtier, le dispositif de palier coulissant (16) comprenant au moins un premier corps coulissant (30) et au moins un second corps coulissant (32),
**caractérisé en ce que**
au moins une portion du premier corps coulissant (30) est en un matériau hybride, le matériau hybride comprenant une couche de support (38) et une couche de coulissement (40), la couche de coulissement (40) et/ou le second corps coulissant (32) étant en matière plastique ou en composite plastique, la couche de coulissement (40) et le second corps coulissant (32) formant un appariement de coulissement soit par deux polymères différents parmi les groupes des polyamides (PA), des polyoxyméthylènes (POM), des polycétones (PK), des polytétrafluoroéthylènes (PTFE), des polyéthylène-téréphtalates (PET) ou des polybutylène-téréphtalates (PBT), soit l'appariement de coulissement est formé par du polycétone contre polycétone, les polymères de l'appariement de coulissement se présentant respectivement en phase polymère thermoplastique continue.

2. Palier coulissant (10) selon la revendication 1,
**caractérisé en ce que**
la couche de coulissement (40) s'appuie en coulissement contre le second corps coulissant (30).

3. Palier coulissant (10) selon la revendication 1 ou 2,
**caractérisé en ce que**
la couche de support (38) est en métal.

4. Palier coulissant (10) selon l'une des revendications précédentes,
**caractérisé en ce que**
la couche de coulissement (40) et/ou le second corps coulissant (32) présente au moins un additif, l'additif présentant de préférence du polytétrafluoroéthylène, du MoS2, des huiles de silicone, du graphite, du graphène, des nanofibres de carbone et/ou des nanotubes de carbone.

5. Palier coulissant (10) selon l'une des revendications précédentes,
**caractérisé en ce que**
une couche adhésive (39) est disposée entre la couche de support (38) et la couche de coulissement (40).

6. Palier coulissant (10) selon l'une des revendications précédentes,
**caractérisé en ce que**
la couche de coulissement (40) est appliquée par laquage ou par revêtement de poudre sur la couche de support (38).

7. Palier coulissant (10) selon l'une des revendications précédentes,
**caractérisé en ce que**
le premier corps coulissant (30) présente au moins une traversée (35).

8. Palier coulissant (10) selon l'une des revendications précédentes,
**caractérisé en ce que**
le premier corps coulissant (30) et/ou le second corps coulissant (32) comporte(nt) une portion axiale de corps coulissant (34, 44) pour encaisser des forces axiales, et/ou une portion radiale de corps coulissant (36, 46) pour encaisser des forces radiales.

9. Palier coulissant (10) selon l'une des revendications précédentes,
**caractérisé en ce que**
le premier corps coulissant (30) comprend un premier anneau de coulissement (54) pour encaisser des forces radiales, et/ou le second corps coulissant (32) comprend un second anneau de coulissement (56) pour encaisser des forces radiales.

10. Palier coulissant (10) selon l'une des revendications précédentes,
**caractérisé en ce que**
un lubrifiant est prévu entre les corps coulissants (30, 32), le lubrifiant étant de préférence une graisse qui présente un coefficient de consistance compris entre environ 1 et environ 4, en particulier entre environ 2 et environ 3.

11. Palier coulissant (10) selon la revendication 10,
**caractérisé en ce que**
au moins une échancrure (48), au moins une moulure, au moins une rainure et/ou une structuration est ménagée dans le premier corps coulissant (30) et/ou dans le second corps coulissant (32).

12. Palier coulissant (10) selon l'une des revendications précédentes,
**caractérisé en ce que**
le premier corps coulissant (30) et/ou le second corps coulissant (32) est relié à la première partie de boîtier (12) et/ou à la seconde partie de boîtier (14) par coopération de forme, de force et/ou de matière.

13. Palier coulissant (10) selon l'une des revendications précédentes,
**caractérisé en ce que**
le premier corps coulissant (30) et/ou le second corps coulissant (32) est/sont réalisé(s) en forme de rondelle et/ou en forme de chapeau.

14. Palier coulissant (10) selon l'une des revendications précédentes,
**caractérisé en ce que**
la première partie de boîtier (12) et/ou la seconde partie de boîtier (14) est/sont en matière plastique.

15. Procédé pour réaliser un palier coulissant selon l'une des revendications 1 à 14, comprenant les étapes suivantes consistant à :
a. couler par injection une première partie de boîtier (12) et une seconde partie de boîtier (14) en matière plastique ;
b. relier par coopération de forme, de force et/ou de matière un corps coulissant (30) à la première partie de boîtier (12) et un second corps coulissant (32) en matière plastique à la seconde partie de boîtier (14), le corps coulissant (30) étant réalisé selon le procédé suivant :
i. fournir une couche de support (38) ;
ii. transformer la couche de support (38) en un corps en forme de rondelle ou de chapeau ;
iii. appliquer une matière plastique pulvérulente ou un composite de plastique pulvérulent, formant la couche de coulissement (40), sur la couche de support (38) par revêtement de poudre électrostatique ; et
iv. faire fondre et refroidir la matière plastique ou le composite de plastique formant la couche de coulissement (40) ; et
c. relier les deux parties de boîtier (12, 14) de telle sorte que les deux corps coulissants (30, 32) s'appuient en coulissement l'un contre l'autre.
